# EUROPÄISCHE PATENTSCHRIFT

(11) **EP 1 204 516 B1**
(45) Veröffentlichungstag und Bekanntmachung des Hinweises auf die Patenterteilung: **10.09.2003**
(21) Anmeldenummer: 00938692.1
(22) Anmeldetag: 27.05.2000
(51) Int. Cl.: B29C 33/52

(54) **VERFAHREN ZUR HERSTELLUNG EINES HOHLKÖRPERS IN SCHMELZKERNTECHNIK**
METHOD FOR PRODUCING A HOLLOW BODY USING THE LOST CORE TECHNOLOGY
PROCEDE DE REALISATION D'UN CORPS CREUX PAR LA TECHNIQUE DE MOULAGE A NOYAU FUSIBLE

(30) Priorität: 22.07.1999 DE 19934379
(43) Veröffentlichungstag der Anmeldung: 15.05.2002
(73) Patentinhaber: FILTERWERK MANN + HUMMEL GMBH, 71631 Ludwigsburg (DE)
(72) Erfinder: STEINER, Günter, D-71549 Auenwald (DE); HILLMANN, Jürgen, D-71711 Steinheim (DE)
(74) Vertreter: Voth, Gerhard, Dipl.-Ing.
(86) Internationale Anmeldenummer: EP0004849
(87) Internationale Veröffentlichungsnummer: WO01007227

(56) Entgegenhaltungen:
- DE-A- 19 515 974
- FR-A- 2 743 621
- GB-A- 2 235 973
- US-A- 4 700 480
- PATENT ABSTRACTS OF JAPAN vol. 008, no. 207 (M-327), 21. September 1984 (1984-09-21) & JP 59 095130 A (HITACHI PLANT KENSETSU KK;OTHERS: 01), 1. Juni 1984 (1984-06-01)

## Beschreibung

Die Erfindung betrifft ein Verfahren zur Herstellung eines Hohlkörpers in Schmelzkerntechnik, wobei der Schmelzkern ein Einlegeteil aufweist, nach der Gattung des Patentanspruches 1. JP59095130 zeigt ein derartiges Verfahren. Außerdem betrifft die Erfindung eine Vorrichtung zur Anwendung des Verfahrens nach der Gattung des Patentanspruches 6. Ferner betrifft die Erfindung einen Wärmetauscher bzw. eine Kraftstoffverteilerleiste, die nach dem Verfahren gemäß Anspruch 1 hergestellt sind, nach der Gattung der Ansprüche 7 und 8.

Aus der DE 195 15 974 A1 sind Hohlkörperkeme bekannt, weiche sich zur Herstellung von Formkörpern im Kernschmelzverfahren eignen (vergl. hierzu Fig. 2 dieses Dokuments). Der Hohlkörperkern 31 weist ein Stützelement 10 auf, welches an einer Seite aus dem Hohlkörperkern hinausragt. Mit Hilfe des Stützelementes kann der Hohlkörperkern in der Form 35 fixiert werden, um anschließend den Formkörper 40 zu spritzen. Wird der Hohlkörperkern 31 ausgeschmolzen, so läßt sich anschließend das Stützelement 10 problemlos entfernen.

Hierdurch lassen sich komplexe Innenraumstrukturen von Formkörpern herstellen. Insbesondere können die den Innenraum bildenden Strukturen des Hohlkörperkern größere Abmessungen aufweisen als die im hohlen Formkörper vorgesehenen Öffnungen, da das Kernmaterial nach dem Gießprozeß ausgeschmolzen werden kann. Die Zuführung des flüssigen Spritzmaterials für den Formkörper kann z. B. durch Kanäle erfolgen, die in das Stützelement integriert sind.

Doch auch bei Verwendung des beschriebenen Hohlkörperkems mit Stützelement sind der freien Gestaltung des Formkörperinnenraums Grenzen gesetzt. Das Stützelement als solches läßt sich nicht ausschmelzen und muß daher dem Innenraum des fertigen Formkörpers entnommen werden können. Besondere Probleme stellt die Fertigung von mehrwandigen Bauteilen dar, für die mehrere gießtechnische Schritte vorgesehen werden müssen.

Aufgabe der Erfindung ist es daher, ein Verfahren für die Herstellung von Hohlkörpern zu schaffen, welches eine freie Gestaltung des durch den Hohlkörper gebildeten Hohlraums ermöglicht, wobei insbesondere mehrwandige Bauteile in möglichst wenigen Fertigungsschritten kostengünstig hergestellt werden sollen.

Diese Aufgabe wird durch die Merkmale des Patentanspruches 1 gelöst. Ferner werden gemäß Anspruch 6 eine Vorrichtung zur Durchführung dieses Verfahrens und gemäß der Ansprüche 7 und 8 verschiedene nach dem Verfahren hergestellte Bauteile beansprucht.

### Vorteile der Erfindung

Erfindungsgemäß wird ein Verfahren nach Anspruch 1 zur Lösung der Aufgabe angewandt. Dieser Schmelzkern wird mit Hilfe eines Urformverfahrens, insbesondere in Spritzgußtechnik, z. B. durch Kunststoff umgeben, wodurch der Hohlkörper entsteht. Das Einlegeteil ist in den Schmelzkern eingebracht. Dies kann durch Umgießen des Einlegeteils durch den Schmelzkem oder durch Einlegen in diesen erfolgen. Dadurch ist das Einlegeteil in seiner Position im durch den Schmelzkem gebildeten Hohlraum des Hohlkörpers geometrisch eindeutig definiert. Das Einlegeteil ragt aus dem Schmelzkern hervor. Dies bedeutet, daß das Einlegeteil entweder aus der Schmelzkernkontur hinausragt oder zumindest Flächen aufweist, die mit der Kontur des Schmelzkerns abschließen und so in direktem Kontakt mit dem herzustellenden Hohlkörper treten können. Daher wird das Einlegeteil durch Bildung des Hohlkörpers in diesem fixiert. Wird nach Erkalten des Hohlkörpers der Schmelzkern ausgeschmolzen, so verbleibt das Einlegeteil im Hohlkörper und bildet mit diesem zusammen die gewünschte Raumform des Hohlkörpers.

Durch dieses Verfahren lassen sich insbesondere mehrwandige Hohlkörper erzielen. Der Hohlraum des Hohlkörpers wird dabei durch die Wandung desselben gebildet. Das Einlegeteil selbst kann gemäß einer sinnvollen Ausgestaltung des Erfindungsgedankens einen Innenraum bilden, der z. B. zu einer Materialersparnis führen kann. Der Innenraum des Einlegeteils kann für sich verschlossen sein oder Öffnungen aufweisen, die aus dem Hohlkörper herausführen oder in dessen Hohlraum münden. Die Öffnungen zum Hohlraum hin können vor dem Umgießen mit dem Schmelzkern verschlossen werden. Dadurch wird vermieden, daß Kernmaterial in den Innenraum dringt. Dieses Material würde die Masse des Schmelzkerns unnötig vergrößern, wodurch eine höhere Energiemenge zum Ausschmelzen des Kerns nötig wäre.

Das Einlegeteil kann zumindest an einer Stelle abdichtend in den Hohlkörper eingegossen werden. Dies geschieht dadurch, daß das aus dem Schmelzkern herausragende Ende des Einlegeteils in die Wandung des Hohlkörpers eingegossen wird. Auf diese Weise lassen sich Hohlkörper erzeugen, die nach außen hin abgedichtet sind oder eine Abdichtung zwischen Innenraum des Einlegeteils und Hohlraum des Hohlkörpers aufweisen. Es lassen sich durch dieses Verfahren kostengünstig in einem Gießvorgang mehrwandige Strukturen herstellen, die gleichzeitig eine hohe Berstfestigkeit aufweisen.

Um das Einlegeteil im Hohlkörper zu fixieren, kann zusätzlich oder ausschließlich mindestens ein Abstützsegment vorgesehen werden, welches durch den Schmelzkern abgebildet wird. Die Abbildung im Schmelzkem wird dann bei der Herstellung des Hohlkörpers durch das Hohlkörpermaterial ausgefüllt, wobei eine Berührung zum Einlegeteil hin erfolgt. Nach der Erstarrung des Hohlkörpermaterials bildet das mindestens eine Abstützsegment eine Art Aufnahme oder Einfassung für das Einlegeteil.

Eine Vorrichtung zur Herstellung des Hohlkörpers nach dem erfindungsgemäßen Verfahren wird ebenfalls beansprucht. Diese Vorrichtung muß einen Schmelzkern aufweisen, der mit einem Einlegeteil in dem Sinne verbunden ist, daß dieses nach dem Ausschmelzen des Schmelzkerns im Hohlkörper verbleibt. Dadurch ergeben sich die bereits beschriebenen Vorteile für den Hohlkörper.

Ein Wärmetauscher gemäß Anspruch 7 stellt eine sinnvolle Anwendung des erfindungsgemäßen Verfahrens her. Der Wärmetauscher ist mehrwandig aufgebaut, wobei das Einlegeteil zwei Volumina dicht voneinander trennen muß. Diese Volumina weisen Anschlüsse auf, welche zur Einleitung bzw. zur Ausleitung eines Kühlmediums und eines zu kühlenden Mediums dienen. Somit wird der Hohlraum des Wärmetauschergehäuses. welches als Hohlkörper im Sinne des Anspruches 1 zu verstehen ist, zur Leitung des einen Fluids genutzt und der durch das Einlegeteil gebildete Innenraum zur Leitung des anderen. Das Material des Einlegeteils muß somit die Wärmeübertragung zwischen den beiden Fluiden gewährleisten. Hierzu ist ein wärmeleitfähiges Material notwendig. Diese Eigenschaft ist fast allen Materialien eigen, wobei es mehr oder weniger geeignete Vertreter gibt. Besonders geeignete Materialien sind aufgrund ihrer guten Wärmeleitfähigkeit die Metalle, insbesondere Kupfer.

Der Wärmetauscher kann im Gleichstrom- und Gegenstromverfahren genutzt werden. Dabei ist es unerheblich, ob das zu kühlende Fluid durch den Hohlraum oder durch den Innenraum des Wärmetauschers geleitet wird. Die Funktion ist in beiden Fällen gleichermaßen gegeben, wobei das Kühlmedium jeweils durch den anderen Raum geleitet wird. Statt eines Kühlmediums kann selbstverständlich auch ein Heizmedium verwendet werden.

Ein anderes Anwendungsbeispiel für das erfindungsgemäße Verfahren ist eine Kraftstoffverteilerleiste, wie diese für Brennkraftmaschinen angewandt wird. Sie dient der Zuleitung des Kraftstoffes von einem Einlaß für den Kraftstoff hin zu Kraftstoflzuführungen, die mit den Einspritzventilen der Brennkraftmaschine in Verbindung stehen. Für eine optimale Verteilung des Kraftstoffes zu den verschiedenen Zuführungen ist ein Vorlauf notwendig, der in die Kraftstoffverteilerleiste integriert werden muß. Dieser kann als erfindungsgemäßes Einlegeteil ausgebildet werden, wobei das Einlegeteil bevorzugt rohrförmig ist und den Kraftstoff von einem Einlaß, der aus der Verteilerleiste hinausragt und mit einer Kraftstoffleitung verbunden werden kann, zu einem Auslaß in den Hohlraum der Kraftstoffverteilerleiste hinein leitet. Dieses Einlegeteil kann aus demselben Kunststoff gefertigt werden wie die Kraftstoffverteilerleiste oder auch einem anderen Kunststoff, wobei dieser einen höheren Schmelzpunkt aufweisen muß als der Schmelzkern. Das Einlegeteil kann auch aus Metall gefertigt werden, wobei die Möglichkeit besteht, die gute Wärmeleitfähigkeit dieses Materials dazu zu verwenden, den Kraftstoff bei tiefen Temperaturen aufzuheizen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: den Längsschnitt durch einen Kühler, der ein in einem Ausschmelzkern fixiertes Einlegeteil aufweist, vor dem Ausschmelzen des Auschmelzkerns,
- Figur 2: einen Querschnitt durch den Ausschmelzkern mit Einlegeteil,
- Figur 3: eine Kraftstoffverteilerleiste, wobei der Bereich mit dem Einlegeteil im Längsschnitt dargestellt ist und
- Figur 4: den Schnitt A - A gemäß Figur 3 (es ist gleichzeitig der Schnitt B - B eingezeichnet, der die Darstellung gemäß Figur 3 andeutet).

### Beschreibung der Ausführungsbeispiele

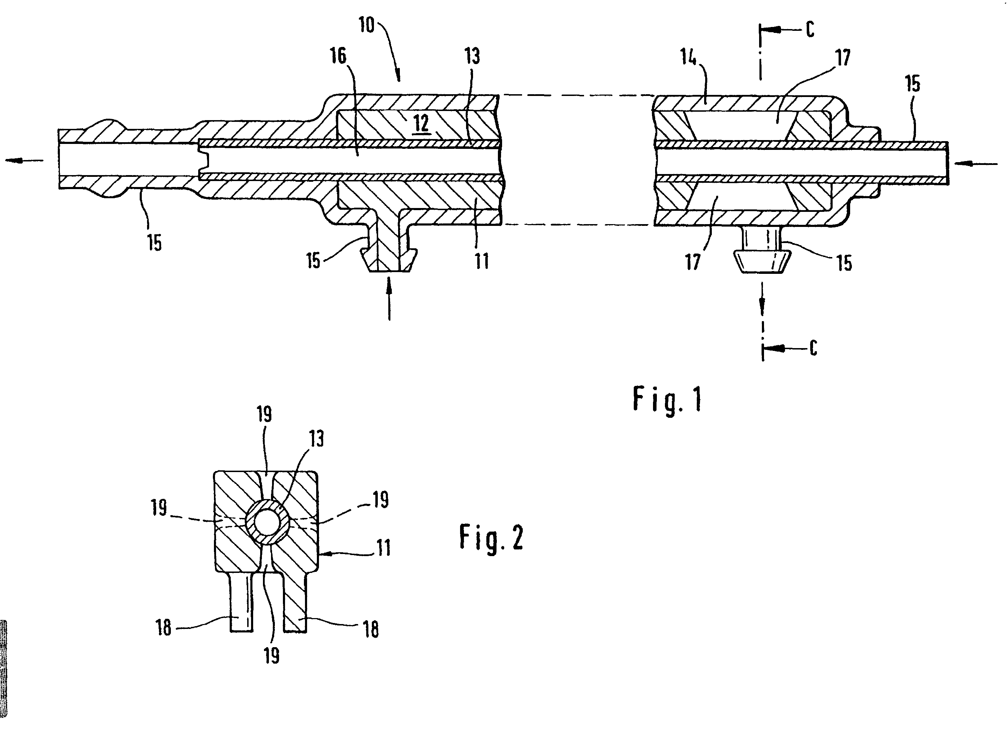

In Figur 1 ist ein Wärmetauscher 10 im Zustand nach dem Spritzgießen und Entformen und vor dem Ausschmelzen eines Schmelzkerns 11 dargestellt. Der Schmelzkern 11 füllt einen Hohlraum 12 aus, der bei der späteren Verwendung des Wärmetauschers z. B. ein Kühlmedium führen soll. Ein Durchlaufrohr 13 ist im Schmetzkern eingegossen und ragt aus dessen Enden derart hervor, daß die Enden in die Wandung eines Kühlergehäuses 14 eingegossen sind. Durch das Durchlaufrohr kann bei Inbetriebnahme das zu kühlende Medium geleitet werden. Die Flußrichtung des Kühlmediums und des zu kühlenden Mediums sind durch Pfeile angedeutet, wobei eine Kühlung im Gegenstromverfahren realisiert ist. Die Zu- bzw. Ableitung der Medien erfolgt durch Fluidanschlüsse 15.

Das Durchlaufrohr besitzt einen Innenraum 16, welcher direkt als Fluidanschluß genutzt werden kann, wenn es aus dem Kühlergehäuse herausragt oder indirekt einen Fluidanschluß bildet, wenn es vollständig durch den Kunststoff des Kühlergehäuses umgossen ist. Im Hohlraum 12 können außerdem Abstützsegmente 17 vorgesehen werden, die das Durchlaufrohr in seiner Lage stabilisieren.

Der Schmelzkern bildet gleichzeitig die Querschnitte derjenigen Fluidanschlüsse mit, die mit dem Hohlraum verbunden sind. Diese Fluidanschlüsse dienen gleichzeitig dazu, daß der geschmolzene Schmelzkern aus dem Hohlraum herauslaufen kann.

In Figur 2 ist der für den Wärmetauscher gemäß Figur 1 zum Einsatz kommende Schmelzkem 11 im Schnitt dargestellt (s. Schnitt C - C gem. Figur 1). Es sind Ansätze 18 für die Fluidanschlüsse erkennbar sowie Aussparungen 19, die die Abstützsegmente 17 abbilden. Die Abstützsegmente werden dann durch Ausfüllen dieser Aussparungen durch den Werkstoff des Kühlergehäuses erzielt, wobei eine direkte Verbindung zum Durchlaufrohr 13 entsteht.

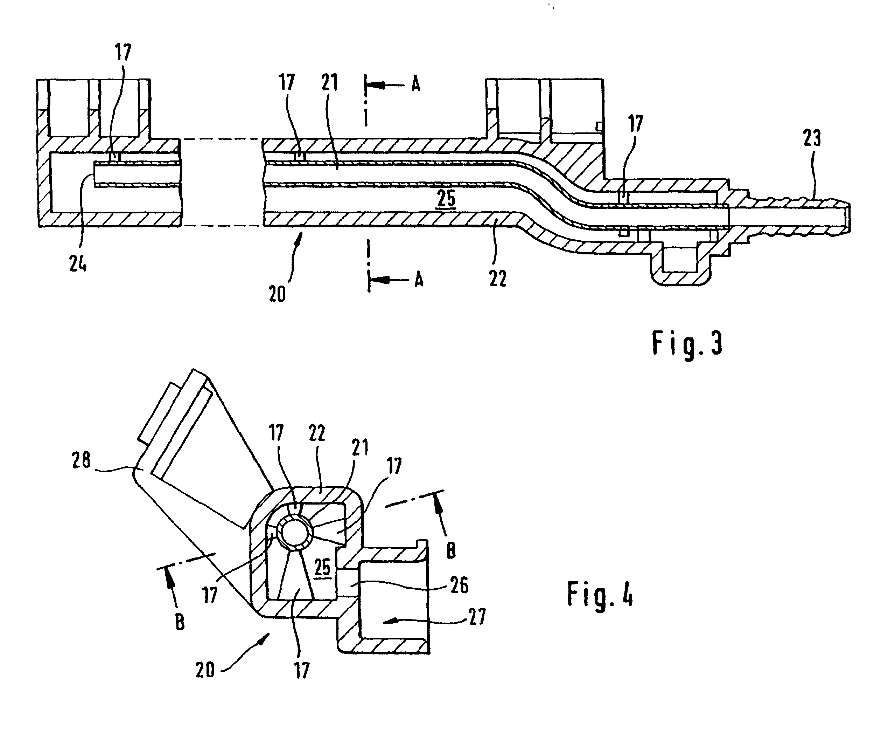

In Figur 3 ist eine Kraftstoffverteilerleiste 20 nach Ausschmelzen des Schmelzkerns dargestellt. Als Einlegeteil kommt ein Einlaufrohr 21 zum Einsatz, welches einseitig in eine Gehäuse 22 der Kraftstoffverteilerleiste eingegossen ist. Auf dieser Seite ist am Einlaufrohr ein Einlaß 23 für den zu verteilenden Kraftstoff realisiert. Mit einem Auslaß 24 mündet das Einlaufrohr 21 in einen Verteilerraum 25, in den der Kraftstoff eingespeist wird. Der Verteilerraum ist der durch den Schmelzkern gebildete Hohlraum. Das Einlaufrohr ist mit Abstützsegmenten 17 gehalten, da das freie Ende des Einlaufrohres sonst zu Schwingungen angeregt werden könnte.

Die Abstützsegmente 17 sind auch in Figur 4 gut zu erkennen. Von diesen wird das Einlaufrohr 21 von vier Seiten im Verteilerraum 25 fixiert. Der Verteilerraum weist für jeden Zylinder einer nicht dargestellten Brennkraftmaschine eine Kraftstoffzuführung 26 auf, von denen eine dargestellt ist. An der Kraftstoffzuführung ist eine Aufnahme 27 für ein nicht dargestelltes Kraftstoffeinspritzventil angebracht. Weiterhin weist die Kraftstoffverteilerieiste 20 Befestigungsflansche 28 auf.

## Patentansprüche

1. Verfahren zur Herstellung eines Hohlkörpers (14, 22) im Urformverfahren, insbesondere in Spritzgußtechnik, wobei
- ein Hohlraum (12, 25) des Hohlkörpers zumindest teilweise durch einen Schmelzkern (11) gebildet wird, der nach dem Erstarren des Werkstoffes des Hohlkörpers aus diesem ausgeschmolzen wird,
- der Schmelzkern (11) ein Einlegeteil (13, 21) aufweist, welches bei der Herstellung in diesen eingebracht wird und teilweise aus dem Schmelzkern herausragt, wobei
- das Einlegeteil (13, 21) durch die Bildung des Hohlkörpers (14, 22) in diesem fixiert wird, so dass das Einlegeteil nach dem Ausschmelzen des Schmelzkerns im Hohlkörper verbleibt, wobei das Einlegeteil (13, 21) selbst einen Innenraum (16) aufweist, wobei
- das Einlegeteil aus einem wärmeleitfähigen Material hergestellt ist und der Hohlraum (12, 25) des Hohlkörpers vollständig gegen den Innenraum (16) des Einlegeteils abgedichtet ist und Innenraum sowie Hohlraum Fluidanschlüsse (15) aufweisen.

2. Verfahren nach Anspruch 1, **dadurch gekennzeichnet, daß** das Einlegeteil (13, 21) selbst einen Innenraum (16) aufweist.

3. Verfahren nach Anspruch 2, **dadurch gekennzeichnet, daß** der Innenraum (16) des Einlegeteils mindestens eine Öffnung+15 aufweist, die vor dem Umgießen mit dem Schmelzkern (11) verschlossen wird und die nach dem Umgießen von dem Schmelzkern (11) eingeschlossen ist.

4. Verfahren nach einem der vorherigen Ansprüche, **dadurch gekennzeichnet, daß** das Einlegeteil (13, 21) zumindest an einer Stelle abdichtend in den Hohlkörper (14, 22) eingegossen wird.

5. Verfahren nach einem der vorherigen Ansprüche, **dadurch gekennzeichnet, daß** in dem Schmelzkern mindestens ein Abstützsegmente (17) abgebildet wird, das beim Herstellen des Hohlkörpers ausgefüllt wird und dadurch zu einer Abstützung des Einlegeteils (13, 21) führt.

6. Vorrichtung zur Herstellung eines Hohlkörpers (14, 22) in Urformtechnik, **dadurch gekennzeichnet, daß** diese zur Anwendung eines Verfahrens gemäß einem der vorherigen Ansprüche vorgesehen ist.

7. Wärmetauscher, **dadurch gekennzeichnet, daß** dieser nach dem Verfahren gemäß einem der Ansprüche 1 bis 5 hergestellt ist, wobei das Einlegeteil aus einem wärmeleitfähigen Material hergestellt ist und der Hohlraum (12, 25) des Hohlkörpers vollständig gegen den Innenraum (16) des Einlegeteils abgedichtet ist und Innenraum sowie Hohlraum Fluidanschlüsse (15) aufweisen.

8. Kraftstoffverteilerleiste **dadurch gekennzeichnet, daß** dieser nach dem Verfahren gemäß einem der Ansprüche 1 bis 5 hergestellt ist, wobei das Einlegeteil als Einlaufrohr (21) ausgebildet ist, welches mit einem Einlaß (23) für den Kraftstoff und einem Auslaß (24) in den Verteilerraum (25) ausgestattet ist.

## Claims

1. Method of producing a hollow body (14, 22) by a master moulding process, more especially by an injection-moulding technique, wherein
- a cavity (12, 25) of the hollow body is at least partially formed by a meltable core (11), which is molten from the hollow body once the material of said hollow body has set,
- the meltable core (11) has an insert (13, 21) which is introduced into said core during the production process and protrudes partially from the meltable core,
- the insert (13, 21) being secured in the hollow body (14, 22) by the formation of said body, so that the insert remains in the hollow body after the melting-out of the meltable core, the insert (13, 21) itself having an interior (16),
- the insert being produced from a heat-conductive material, and the cavity (12, 25) of the hollow body being completely sealed from the interior (16) of the; insert, and both the interior and the cavity having fluid connections (15).

2. Method according to claim 1, **characterised in that** the insert (13, 21) itself has an interior (16).

3. Method according to claim 2, **characterised in that** the interior (16) of the insert has at least one aperture which is closed prior to being integrally cast with the meltable core (11), and which is enclosed by the meltable core (11) after the integral casting process.

4. Method according to one of the previous claims, **characterised in that** the insert (13, 21) is inserted into the hollow body (14, 22) so as to provide sealing at at least one location.

5. Method according to one of the previous claims, **characterised in that** at least one supporting segment (17) is reproduced in the meltable core, which segment is filled for the production of the hollow body and thereby leads to a support for the insert (13, 21).

6. Apparatus for producing a hollow body (14, 22) by a master moulding technique, **characterised in that** said apparatus is provided to accomplish a method according to one of the previous claims.

7. Heat exchanger, **characterised in that** said exchanger is produced by the method according to one of claims I to 5, the insert being produced from a heat-conductive material, and the cavity (12, 25) of the hollow body being completely sealed from the interior (16) of the insert, and both the interior and the cavity having fluid connections (15).

8. Fuel distributor bar, **characterised in that** said bar is produced by the method according to one of claims 1 to 5, the insert being in the form of intake pipe (21), which is provided with an inlet (23) for the fuel and an outlet (24) extending into the distributor chamber (25).

## Revendications

1. Procédé de production d'un corps creux (14, 22) par transformation primaire, en particulier par moulage par injection, selon lequel,
- une cavité (12, 25) du corps creux est formée au moins partiellement par un noyau fusible (11) qui est ensuite extrait du corps creux par fusion après la solidification de la matière de ce dernier,
- le noyau fusible (11) présente un insert (13, 21) qui est mis en place dans ce noyau lors de la fabrication et qui émerge partiellement du noyau fusible,
- l'insert (13, 21) est fixé dans le corps creux (14, 22) par la formation de ce dernier, de sorte que l'insert reste dans le corps creux après l'extraction du noyau fusible par fusion, l'insert (13, 21) présentant lui-même un espace intérieur (16), et
- l'insert est fabriqué en une matière conductrice de la chaleur et la cavité (12, 25) du corps creux est entièrement isolée hermétiquement de l'espace intérieur (16) de l'insert et l'espace intérieur ainsi que la cavité présentent des raccords de fluide (15).

2. Procédé selon la revendication 1,
**caractérisé en ce que**
l'insert (13, 21) présente lui-même un espace intérieur (16).

3. Procédé selon la revendication 2,
**caractérisé en ce que**
l'espace intérieur (16) de l'insert présente au moins une ouverture (15) qui est fermée avant le surmoulage de l'insert avec le noyau fusible (11) et qui est entourée après le surmoulage du noyau fusible (11).

4. Procédé selon une des revendications précédentes,
**caractérisé en ce que**
l'insert (13, 21) est noyé hermétiquement dans le corps creux (14, 22), au moins en un endroit.

5. Procédé selon une des revendications précédentes,
**caractérisé en ce que**
dans le noyau fusible est formé au moins un segment d'appui (17), rempli lors de la production du corps creux et qui conduit de ce fait à donner un appui à l'insert (13, 21).

6. Dispositif pour la production d'un corps creux (14, 22) dans la technique de formage,
**caractérisé en ce que**
ce dispositif est prévu pour l'utilisation d'un procédé selon une des revendications précédentes.

7. Echangeur de chaleur,
**caractérisé en ce qu'**
il est produit par le procédé selon une des revendications 1 à 5, l'insert étant fabriqué en une matière conductrice de la chaleur et la cavité (12, 25) du corps creux étant entièrement isolée hermétiquement de l'espace intérieur (16) de l'insert, l'espace intérieur et la cavité présentant des raccords de fluide (15).

8. Rampe de distributeur de carburant,
**caractérisée en ce qu'**
elle est fabriquée par le procédé selon une des revendications 1 à 5, l'insert étant constitué par un tube d'arrivée (21) qui est équipé d'une entrée (23) pour le carburant et d'une sortie (24) donnant dans l'espace du distributeur (25).
